# EUROPEAN PATENT APPLICATION

(11) **EP 4 691 860 A1**
(43) Date of publication of application: **11.02.2026**
(21) Application number: 23930140.1
(22) Date of filing: 26.12.2023
(51) Int. Cl.: B60R 22/00, H05B 1/02, B60R 22/18

(54) **SAFETY BELT SYSTEM AND SEAT**

(30) Priority: 29.03.2023 CN 202320647535 U
(71) Applicant: Autoliv Development AB, 44783 Vargarda (SE)
(72) Inventor: TENG, Yue, Shanghai 201807 (CN); LIU, Yanguang, Shanghai 201807 (CN)
(74) Representative: Müller Verweyen
(86) International application number: PCT/CN2023/142119
(87) International publication number: WO 2024/198577

(57) **Abstract**

A seat belt system (1). The seat belt system (1) includes a seat belt webbing (11), including a tubular section (111) defining a passage; a heater module (12), and a control module (14) configured to control a heating operation of the heater module (12); and a housing (13), fixed to an outer side of the seat belt webbing (11) and accommodating one end of the heater module (12) and one end of the control module (14) in an internal space thereof. The heater module (12) is positioned within the passage of the seat belt webbing (11), and the control module (14) is positioned at the outer side of the seat belt webbing (11). An inner side of the housing (13) is provided with a connecting piece (134) in the form of a protruding post, the connecting piece (134) passing through the seat belt webbing (11), a first printed circuit board (122) of the heater module (12) at an end portion thereof, and a second printed circuit board (141) of the control module (14) at an end portion thereof, and then fixing the first printed circuit board (122) and the second printed circuit board (141) to the seat belt webbing (11). Further disclosed is a seat including the seat belt system.

## Description

### TECHNICAL FIELD

The present invention relates to a safety apparatus for a vehicle, and in particular, to a seat belt system and a seat.

### BACKGROUND ART

A seat belt, used as a safety apparatus, is installed in a vehicle, so as to be used to restrain an occupant during a collision, and to prevent a secondary collision between the occupant and a steering wheel, a dashboard, and the like during the collision, or to prevent the occupant from being thrown out of the vehicle during the collision, thereby causing death or injury. The seat belt for the vehicle may also be referred to as a seat safety belt, and is an occupant restraint apparatus. Such a seat belt is generally recognized as the most inexpensive and effective safety apparatus, and in many countries, installation of seat belts in vehicles is mandatory.

Considering that the seat belt is in contact with the body of an occupant, the seat belt is designed to have a heating function, so as to improve the occupant's experience.

It is desirable to provide a seat belt integrated with a heating module.

### SUMMARY OF THE INVENTION

An object of the present invention is to provide a seat belt system integrated with a heating module, and a seat comprising the seat belt system.

Provided in a first aspect of the present invention is a seat belt system, comprising:
a seat belt webbing, comprising a tubular section defining a passage; and
a heater module, and a control module configured to control a heating operation of the heater module; and
a housing, fixed to an outer side of the seat belt webbing and accommodating one end of the heater module and one end of the control module in an internal space thereof,
wherein,
the heater module is positioned within the passage of the seat belt webbing, and the control module is positioned at the outer side of the seat belt webbing,
an inner side of the housing is provided with a connecting piece in the form of a protruding post, the connecting piece passing through the seat belt webbing, a first printed circuit board of the heater module at an end portion thereof, and a second printed circuit board of the control module at an end portion thereof, and then fixing the first printed circuit board and the second printed circuit board to the seat belt webbing.

According to an embodiment of the present invention, the housing comprises a fixing piece, and an upper housing and a lower housing fixed together via the fixing piece, and the upper housing and the lower housing are respectively fixed to two opposite outer side surfaces of the tubular section.

According to an embodiment of the present invention, the upper housing is configured as a box-shaped member having the internal space, the lower housing is configured as a plate-shaped member, a depressed part is provided on the side of the lower housing facing the upper housing, and the connecting piece is provided to protrude from the depressed part of the lower housing.

According to an embodiment of the present invention, the fixing piece and the connecting piece are integrated into one member.

According to an embodiment of the present invention, the control module further comprises a wire harness, the second printed circuit board is fixed to one end of the wire harness, and an electrical connector is provided at the other end thereof.

According to an embodiment of the present invention, the fixing piece is configured as a pin having a stepped portion, and the first printed circuit board and the second printed circuit board are each provided with a through hole for the connecting piece to pass through.

According to an embodiment of the present invention, the upper housing is correspondingly provided with a pin hole, and the pin passes through the pin hole to fix the housing on the seat belt webbing via riveting.

According to an embodiment of the present invention, the heater module further comprises a heating pad fixed to the first printed circuit board, and an electro-thermal heating wire electrically connected to the first printed circuit board is provided in the heating pad.

A second aspect of the present invention provides a seat, comprising the seat belt system according to any one of the foregoing and a seat on which the seat belt system is mounted,
wherein the tubular section of the seat belt webbing is arranged on the abdomen or the chest of an occupant.

According to an embodiment of the present invention, the control module communicates with an electronic control unit of a vehicle.

### BRIEF DESCRIPTION OF THE DRAWINGS

The features, advantages, and technical effects of exemplary embodiments of the present invention will be described below with reference to the accompanying drawings. In the accompanying drawings, the same reference numbers denote the same elements, where
FIG. 1 schematically illustrates the structure of a seat belt system according to an embodiment of the present invention.
FIG. 2 schematically illustrates a seat belt system completely assembled according to an embodiment of the present invention.

### DETAILED DESCRIPTION OF PREFERRED EMBODIMENTS

Specific embodiments of a seat belt system and a seat according to the present invention will be described below with reference to the accompanying drawings. The following detailed description and the accompanying drawings are used to illustratively explain the principles of the present invention. The present invention is not limited to the described preferred embodiments, and various embodiments described in the present invention can be used individually or in any combination. The scope of protection of the present invention is defined by the claims.

In addition, terms for spatial relations (such as "upper", "lower", "left", "right", etc.) are used to describe a relative positional relationship between an element and another element shown in the accompanying drawings. Therefore, the terms for spatial relations may be applied to directions different from the directions shown in the accompanying drawings during use. Obviously, although all of these terms for spatial relations refer to the directions shown in the accompanying drawings for ease of explanation, a person skilled in the art will appreciate that directions different from the directions shown in the drawings may be used.

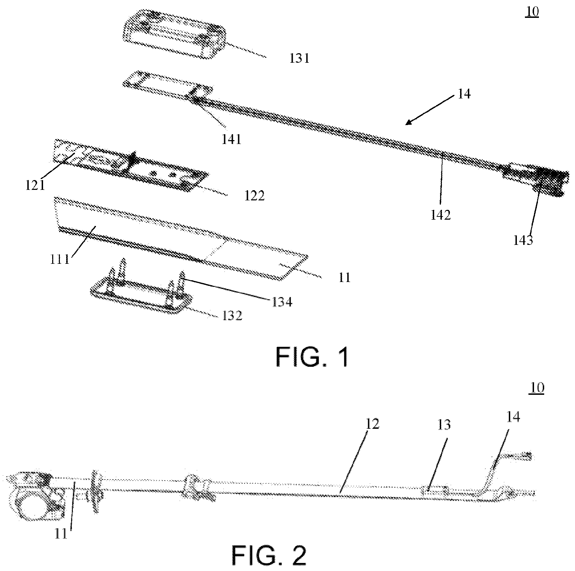

FIG. 1 schematically illustrates the structure of a seat belt system according to an embodiment of the present invention. FIG. 2 schematically illustrates a seat belt system completely assembled according to an embodiment of the present invention. The seat belt system according to the embodiments of the present invention will be described below with reference to FIG. 1 and FIG. 2.

As shown in FIG. 1 and FIG. 2, a first aspect of the present invention provides a seat belt system 10, including a seat belt webbing 11, a heater module 12, a housing 13, and a control module 14.

The seat belt webbing 11 includes a tubular section 111 defining a passage. The tubular section 111 may include, for example, two layers of fabric that are stacked up and down and connected (for example, via a seam) at edges in the length direction, so as to form the elongated passage. The passage may serve as an accommodating space. This will be described below. In addition, as clearly shown in FIG. 2, the left end and the right end of the seat belt webbing 11 are provided with a seat belt retractor and a buckle tongue, respectively, and the seat belt webbing is wound around a winding shaft in the seat belt retractor, so as to adjust the length of the seat belt webbing. The buckle tongue at the right end of the seat belt webbing 11 is configured to fit with a seat belt buckle fixed to the seat, so as to fix the right end of the seat belt webbing 11 to the seat, that is, an occupant fastens the seat belt by inserting the buckle tongue into the buckle.

The heater module 12 includes a heating pad 121 and a first printed circuit board 122 configured to be electrically connected to the heating pad 121, and both the heating pad 121 and the first printed circuit board 122 are positioned within the passage of the seat belt webbing 11. For example, the heater module 12 may be arranged on only a partial section of the seat belt webbing 11, so that the partial section of the seat belt webbing 11 has a heating function, which, in particular, means that the heating pad 121 of the heater module 12 extends over only a partial section of the seat belt webbing 11. As shown in FIG. 1, the passage in the tubular section 111 of the seat belt webbing 11 described above serves as an accommodating space that accommodates the heater module 12. For example, the first printed circuit board 122 includes a thermistor (for example, an NTC thermistor). As a further example, the heating pad 121 includes a substrate (for example, formed by weaving a nylon material or a non-woven fabric material) and a heating wire disposed on the substrate (for example, woven on the substrate in a bent shape). One end of the thermistor is connected to the first printed circuit board 122, and the other end thereof extends within the heating wire to measure the temperature of the heating wire.

The control module 14 is configured to control a heating operation of the heater module 12. The control module 14 includes a second printed circuit board 141, a wire harness 142, and a connector 143. The second printed circuit board 141 and the connector 143 are respectively provided at both ends of the wire harness 142, and the connector 143 is configured to communicate with a central control unit in the vehicle. The first printed circuit board 122 and the second printed circuit board 141 are electrically connected and communicate with each other (for example, via a pin), and the thermistor on the first printed circuit board 122 in the heater module 12 serves as a temperature sensor, which can be configured to measure the temperature of the heating wire and convert the temperature into a temperature signal, and the second printed circuit board 141, based on the temperature signal and via the first printed circuit board 122, controls the heating wire in the heating pad 121 to heat. In the seat belt system 10 of the present invention, the control module 14 is positioned on an outer side of the seat belt webbing 11, and, exemplarily, is shown in FIG. 2 as being positioned on an upper side surface of the seat belt webbing 11. Certainly, this is merely an example, and the control module may alternatively be positioned on a lower side surface of the seat belt webbing.

The housing 13 is fixed to the outer side of the seat belt webbing 11 and accommodates one end of the heater module 12 and one end of the control module 14 in an internal space thereof. This is described in detail below. As shown in FIG. 1, in this example, the housing 13 includes an upper housing 131 and a lower housing 132. The upper housing 131 and the lower housing 132 are disposed on an upper side surface and a lower side surface of the seat belt webbing 11, respectively. Then, the upper housing 131 and the lower housing 132 are joined to define the internal space of the housing 13. That is, the upper housing 131 and the lower housing 132 are aligned in the thickness direction of the seat belt webbing 11 and fixed together. The upper housing 131 is configured as a box-shaped member having the internal space, the lower housing 132 is configured as a plate-shaped member, and a depressed part is provided on the side of the lower housing 132 facing the upper housing 131, that is, on the side of the lower housing 132 facing the upper housing 131, an edge protrudes outward with respect to the remaining portion. It can be understood that this arrangement is advantageous for forming a closed accommodating space in combination with the upper housing 131, and in addition, is advantageous for positioning of the members to be arranged on the side, which is to be described below.

An inner side of the housing 13 is provided with a connecting piece 134 in the form of a protruding post, which is illustrated as being provided on the lower housing 132 in this example. The connecting piece 134 is provided so as to protrude from the depressed part of the lower housing 132, is configured to fix the first printed circuit board 122 of the heating module 12 and the second printed circuit board 141 of the control module 14 to the seat belt webbing 11, and for this purpose, is likewise provided at the tubular section 111 of the seat belt webbing 11. Referring to FIG. 1, the connecting piece 134 sequentially passes through a lower layer of the seat belt webbing 11, the first printed circuit board 122 of the heater module 12 at an end portion thereof, the second printed circuit board 141 of the control module 14 at an end portion thereof, and an upper layer of the seat belt webbing 11. In this way, both the first printed circuit board 122 and the second printed circuit board 141 are fixed to the seat belt webbing 11 via the connecting piece 134. It can be understood that, due to the fact that the connecting piece 134 is provided, except for through holes, neither the first printed circuit board nor the second printed circuit board requires a structure or member to be designed thereon for fixing the two onto the seat belt webbing, which simplifies the structure and processing process of the first printed circuit board and the second printed circuit board.

In an example of the present invention, the connecting piece 134 further serves as a fixing piece for fixing the upper housing 131 and the lower housing 132 together, that is, the fixing piece for fixing the upper housing 131 and the lower housing 132 and the connecting piece for fixing the first printed circuit board 122 and the second printed circuit board 141 to the seat belt webbing 11 are integrated as one member. To this end, the connecting piece 134 is made of a material having good rigidity. Particularly advantageously, in this case, the fixing piece is configured as a pin having a stepped portion, and the first printed circuit board 122 and the second printed circuit board 141 are each provided with a through hole for the pin/connecting piece to pass through. In the embodiment shown in FIG. 1, four pins are provided, which are fixed to four corners of the lower housing 142. Pin holes are correspondingly provided in the upper housing 131. The pins pass through the pin holes, stepped portions on the pins are configured to define lengths of the pins inserted into the pin holes, and to fix the upper housing 131 and the lower housing 132 together via riveting, and thus, the housing 13 and the first printed circuit board 122 and the second printed circuit board 141 accommodated therein are fixed onto the seat belt webbing 11. It should be understood that the above embodiments are merely examples, and the structure of the housing in the present invention is not limited thereto, for example, the housing may be composed of more than two parts.

Therefore, in the seat belt system of the present invention, a connecting piece in the form of a protruding post is provided. The connecting piece passes through the seat belt webbing, the first printed circuit board of the heater module at the end portion thereof, and the second printed circuit board of the control module at the end portion thereof, and then fixes the first printed circuit board and the second printed circuit board to the seat belt webbing. In addition, the housing fixes the heater module and the control module to the seat belt webbing. Therefore, the seat belt system of the present invention is integrated with a heating function.

A second aspect of the invention provides a seat, including the seat belt system of the present invention and a seat on which the seat belt system is mounted. In addition, the tubular section of the seat belt webbing is arranged on the abdomen or the chest of an occupant.

In an embodiment of the present invention, the control module communicates with an electronic control unit of a vehicle, for example, communicates with an electronic control unit of a vehicle via a connector.

It can be understood that a bit described above with reference to the seat belt system of the present invention apply equally to the seat of the present invention and will not be described again here to avoid redundancy.

As described above, although the exemplary embodiments of the present invention have been described with reference to the accompanying drawings in the description, the present invention is not limited to the aforementioned specific embodiments, and the scope of protection of the present invention should be defined by the claims and equivalent meanings thereof.

## Claims

1. A seat belt system (10), comprising:
a seat belt webbing (11), comprising a tubular section (111) defining a passage; and
a heater module (12), and a control module (14) configured to control a heating operation of the heater module (12); and
a housing (13), fixed to an outer side of the seat belt webbing (11) and accommodating one end of the heater module (12) and one end of the control module (14) in an internal space thereof;
**characterized in that**:
the heater module (12) is positioned within the passage of the seat belt webbing (11), and the control module (14) is positioned at the outer side of the seat belt webbing (11),
wherein an inner side of the housing (13) is provided with a connecting piece (134) in the form of a protruding post, the connecting piece (134) passing through the seat belt webbing (11), a first printed circuit board (122) of the heater module (12) at an end portion thereof, and a second printed circuit board (141) of the control module (14) at an end portion thereof, and then fixing the first printed circuit board (122) and the second printed circuit board (141) to the seat belt webbing (11).

2. The seat belt system (10) according to claim 1, wherein the housing (13) comprises a fixing piece, and an upper housing (131) and a lower housing (132) fixed together via the fixing piece, and the upper housing (131) and the lower housing (132) are respectively fixed to two opposite outer side surfaces of the tubular section (111).

3. The seat belt system (10) according to claim 2, wherein the upper housing (131) is configured as a box-shaped member having the internal space, the lower housing (132) is configured as a plate-shaped member, a depressed part is provided on the side of the lower housing (132) facing the upper housing (131), and the connecting piece (134) is provided to protrude from the depressed part of the lower housing (132).

4. The seat belt system (10) according to claim 3, wherein the fixing piece and the connecting piece (134) are integrated into one member.

5. The seat belt system (10) according to claim 1, wherein the control module (14) further comprises a wire harness (142), the second printed circuit board (141) is fixed to one end of the wire harness (142), and an electrical connector (143) is provided at the other end thereof.

6. The seat belt system (10) according to claim 4, wherein the fixing piece is configured as a pin having a stepped portion, and the first printed circuit board (122) and the second printed circuit board (141) are each provided with a through hole for the connecting piece (134) to pass through.

7. The seat belt system (10) according to claim 6, wherein the upper housing (131) is correspondingly provided with a pin hole, and the pin passes through the pin hole to fix the housing (13) on the seat belt webbing (11) via riveting.

8. The seat belt system (10) according to claim 1, wherein the heater module (14) further comprises a heating pad (121) fixed to the first printed circuit board (122), and an electro-thermal heating wire electrically connected to the first printed circuit board (122) is provided in the heating pad (121).

9. A seat, **characterized by** comprising the seat belt system (10) according to any one of claims 1 to 8 and a seat on which the seat belt system (10) is mounted,
wherein the tubular section (111) of the seat belt webbing (10) is arranged on the abdomen or the chest of an occupant.

10. The seat according to claim 9, wherein the control module (14) communicates with an electronic control unit of a vehicle.
